# EUROPEAN PATENT APPLICATION

(11) **EP 1 931 110 A1**
(43) Date of publication of application: **11.06.2008**
(21) Application number: 07019383.4
(22) Date of filing: 03.10.2007
(51) Int. Cl.: H04L 29/08, H04M 7/00, H04M 3/42, H04N 5/00, H04Q 7/38, H04M 1/253

(54) **Presence detection and location update in premise gateways**

(30) Priority: 08.12.2006 US 608536
(71) Applicant: General instrument Corporation, Horsham PA 19044 (US)
(72) Inventor: Falvo, Barry, P., Horsham Pennsylvania 19044 (US); Pazhyannur, Rajesh, S., Horsham Pennsylvania 19044 (US)
(74) Representative: Openshaw, Paul Malcolm

(57) **Abstract**

Described herein are methods and systems operable to detect the presence of clients and communicate their location updates in separate gateway devices, wherein the clients and their functions are physically or logically separated from the gateway functions in the premise gateways, yet state changes in the clients are recognized in the premise gateways. In one embodiment, there is provided a method for detecting and communicating a presence status of a device to provide multiple services to the at least one device, comprising: detecting a first state change of the device at a location, the detecting is external to the device; detecting a first presence status of the device at the location based on the detected first state change; and communicating the detected first presence status of the device to provide the device with first one of the multiple services that is associated with the detected first presence status at the location.

## Description

BACKGROUND

A clear trend in the electronics industry, especially with regard to consumer electronics, is technological convergence, wherein different types of technology may be combined in a single product or device to perform very similar tasks. For example, fixed mobile convergence is becoming increasingly popular because it allows a user to use a single mobile or portable phone for different phone services, such as Internet and cellular phone services. With Internet telephony, a user is able to use an Internet phone to make and receive phone calls anywhere there is an available Internet connection. As referred herein, an Internet phone is any phone that is operable to transmit and receive voice communication using VoIP via the Internet or any other IP-based data network. Thus, an Internet phone is also known as an IP phone, a VoIP phone, or a broadband phone. Accordingly, as also referred herein, a single mode phone is one that is capable of using one of at least VoIP and cellular phone services for at least voice communication. Similarly, a multi-mode phone (such as a dual-mode phone with two modes) is one that is capable of using at least two phone services or any other communication services for at least voice communication.

To enhance the usability and transparency of technological-convergence devices, it is desirable to provide these devices with capabilities to seamlessly transition from one technology type to another for performance of very similar tasks or applications. This is especially important when the task or application is a location-dependent or location-based application that executes different services or in different manners based on different physical settings or locations in which the task/application operates. For example, voice communication performed by a FMC phone may be a location-dependent application. In one exemplary scenario, if the FMC phone is a dual-mode phone operable with both VoIP and cellular phone services, voice communication may be carried out by either VoIP service (when the phone is operating within a designated premise) or cellular phone service (when the phone is operating outside of the designated premise). Thus, it is desirable to provide such a phone with seamless mobility, wherein call or content handoff from a landline phone service to a cellular phone service is seamlessly provided and transparent to the user as the phone roams from one location to another.

SUMMARY

There is a need for reliable mechanisms to determine that a technological-convergence device has roamed from one location into another in order to seamlessly provide location-based applications or features as well as other applications and features to such a device. There exists a number of technological-convergence devices with added client software applications for providing seamless transition of technology to perform various tasks. For example, there are a number of single-mode and dual-mode phones with added client software applications for communicating session initiation protocol (SIP) to establish IP sessions for VoIP communication. However, this solution requires the installation of new functionality in the client devices (hereinafter, "clients"), which further complicates and increases the cost of such devices. Likewise, other client software applications for VoIP are typically integrated applications for the personal computer (PC), such as Internet instant messaging applications, that basically incorporate an integrated solution, e.g., one that identifies the presence of the client, which is the PC in this case, and communicates state changes. Thus, these types of software application require the integration of both client and premise gateway functions in a single device, such as a PC. Consequently, the device becomes more complicated and costly. Furthermore, the gateway functions in each device are not available to other devices that do not have such functions.

Accordingly, embodiments of the present invention provide for reliable mechanisms operable to detect the presence of clients and communicate their location updates in separate gateway devices (hereinafter, "premise gateways"), wherein the clients and their functions are physically or logically separated from the gateway functions in the premise gateways, yet state changes in the clients are recognized in the premise gateways. Embodiments of the present invention also provide for mechanisms that do not require installation of new functionalities in clients.

In one embodiment, there is provided a method for detecting and communicating a presence status of a device to provide multiple services to the at least one device, comprising: detecting a first state change of the device at a location; detecting a first presence status of the device at the location based on the detected first state change; and communicating the detected first presence status of the device to provide the device with first one of the multiple services that is associated with the detected first presence status at the location.

In another embodiment, there is provided a system for detecting and communicating a presence status of a client device to provide multiple services to the client device, comprising: a location server operable to manage a presence status of the client device; a first gateway device located at a first location and operable to detect a presence status of the device at the first location and to communicate the presence status of the client device at the first location to the location server, the first gateway device is different from the client device; a first feature server operable to provide the client device with a first one of the multiple services based on the communicated presence status received at the location server is of a first status; and a second feature server operable to provide the client device with a second one of the multiple services based on the communicated presence status received at the location server is of a second status.

In still another embodiment, there is provided a computer readable medium on which is encoded program code for detecting and communicating a presence status of a device to provide multiple services to the at least one device, the program code comprising: program code for detecting a first state change of the device at a location; program code for detecting a first presence status of the device at the location based on the detected first state change; and program code for communicating the detected first presence status of the device to provide the device with first one of the multiple services that is associated with the detected first presence status at the location.

BRIEF DESCRIPTION OF THE DRAWINGS

Embodiments are illustrated by way of example and not limited in the following figure(s), in which like numerals indicate like elements, in which:

FIG. 1 illustrates a system environment in which one or more premise gateways are deployed to detect and provide updates of the presence of one or more clients, in accordance with one embodiment of the present invention.

FIG. 2 illustrates a process flow for detecting and communicating the presence status of one or more clients in a desired location or setting so that services or features may be remotely provided to the clients, in accordance with one embodiment of the present invention.

FIG. 3 illustrates an implementation example for detecting and providing location updates of one or more clients, in accordance with one embodiment of the present invention.

FIG. 4 illustrates still another implementation example for detecting and providing location updates of one or more clients, in accordance with one embodiment of the present invention.

FIG. 5 illustrates another process flow for detecting and communicating the presence status of one or more clients in a desired location or setting so that services or features may be remotely provided to the clients, in accordance with one embodiment of the present invention.

FIG. 6 illustrates an exemplary block diagram of a computerized module that is operable to be used to implement one or more of the aforementioned premise gateway functionalities in any device to be used as a premise gateway device in accordance with one of the various embodiments of the present invention.

DETAILED DESCRIPTION

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In other instances, well known methods and structures have not been described in detail so as not to unnecessarily obscure the embodiments.

As referred herein, a server is a computer or network of computers. Examples of a server include but are not limited to one or more desktop computers, one or more laptop computers, one or more mainframe computers, one or more networked computers, one or more processor-based devices, or any similar types of systems and devices. Thus, a server includes one or more processors of any of a number of computer processors, such as processors from Intel and AMD. Each processor is coupled to or includes at least one memory device, such as a computer readable medium (CRM). The processor is operable to execute computer-executable program instructions stored in the CRM, such as program code of applications, to run the applications. The computer-executable program instructions include code from any suitable computer-programming language, such as C, C++, C#, Java, or the like. Embodiments of a CRM include, but are not limited to, an electronic, optical, magnetic, or other storage or transmission device capable of providing a processor of the server with computer-readable instructions. Other examples of a suitable CRM include, but are not limited to, a floppy disk, CD-ROM, DVD, magnetic disk, memory chip, ROM, RAM, an ASIC, a configured processor, any optical medium, any magnetic tape or any other magnetic medium, or any other medium from which a computer processor is operable to read instructions.

As also referred herein, a network of devices, such as computers, provides communication connections between the devices in the network via one or more communication protocols. For example, an IP network facilitates communication between devices in such a network using IP (Internet Protocol), which is a well known communication protocol.

As also referred herein, a location-based or location-dependent application is an application that executes different services or in different manners based on different physical settings or locations in which it operates. An example of a location-dependent application is one using a location server or host to manage phone call or content flows from one domain to another.

Described herein are methods and systems for employing one or more premise gateways to detect and communicate the presence or location of clients to one or more location servers so that desired features or services may be provided to the clients. According to various embodiments of the present invention, a universal, cross-platform solution is provided for interoperability with all location servers that greatly simplify the various development efforts across all applicable gateway devices. Detecting and communicating the location status of clients in a premise gateway provides many advantages. For example, service providers wishing to deploy location-based services or features to multiple users no longer need to modify each and every clients of the users. Thus, the service providers are able to accommodate a greater variety of clients, speed up the marketing and delivery of location-based features to the users, and apply resources towards value-add features or services for the users independent of client location detection and communication. Also, for fixed mobile convergence applications, the presence or lack of presence of a client may be determined, and may indicate a state change in the client, when the client is unable to communicate with the location server 110 in the network.

System

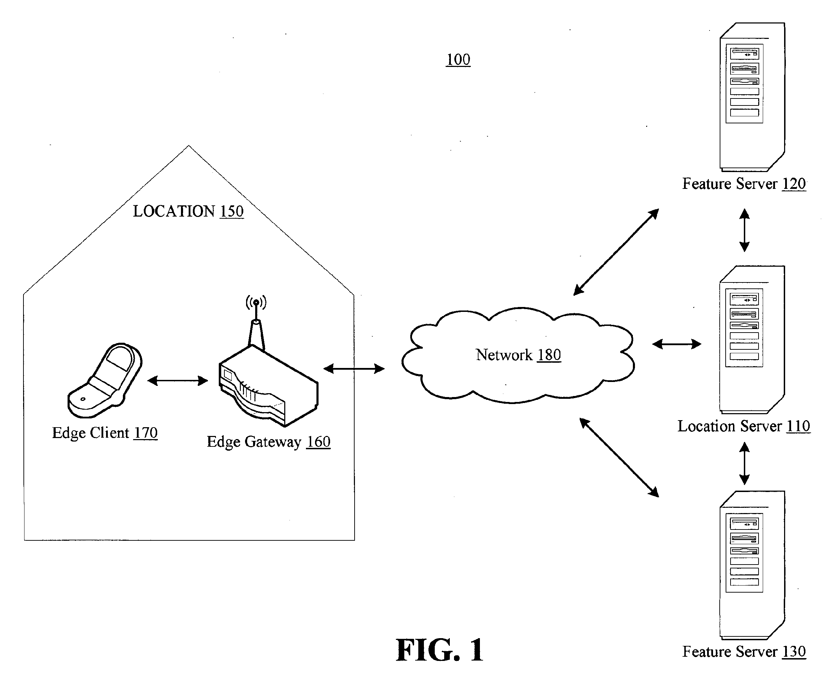

FIG. 1 illustrates a system environment 100 in which one or more premise gateways are deployed to detect and provide updates of the presence of one or more clients, in accordance with one embodiment of the present invention. As shown, the system environment 100 includes a location server 110, a feature server 120, a feature server 130, a premise gateway 160, and a client 170. Although only one premise gateway 160 and one client 170 are illustrated, it should be understood that there may be multiple premise gateways 160 and multiple clients 170 in the location 150 or in different locations, all of which are serviced by the location server 110 and the feature servers 120 and 130.

The location server 110 manages the presence status of a client 170. It receives presence status information of the client 170 from the premise gateway 160 or directly from the client 170. It is responsible for determining the connectivity path to the client 170, especially when multiple concurrent paths are available. The feature server 120 (and the server 130) is the server with which a client 170 establishes sessions on any particular communication path for the desired features provided therein or thereby, such as content access of data (e.g., audio, video, video on demand, Webcasting content, or any other data type), Internet access, voice communication (e.g., VoIP, cellular). An example of a feature server 120 (or 130) includes but is not limited to a SIP proxy server typical in SIP network architectures. The location server 110 and the feature servers 120, 130 may be maintained by the same host entity or different host entities. It should be understood that the location server 110 and the feature servers 12,130 are logically separated and not necessarily separated physically. Thus, the location server 110 and the feature servers 120, 130 may be embodied in the same system.

Although FIG. 1 shows only one location server 110, it should be understood that the system environment 110 may include more than one location servers 110, each may be tasked or responsible with managing the presence status of different clients. Likewise, although FIG. 1 shows two feature servers 120 and 130, it should be understood that the system environment 110 may include more than one feature servers so as to provide clients managed by the particular location server 110 with one or more features. Multiple feature servers may be associated with a single location server, and a single feature server may be associated with multiple location servers 110.

The end user primarily interacts with the client 170, which is a device or application. Examples of clients include but are not limited to dual mode phones, single mode phones, cordless phones, personal computers (PCs) such as desktop PCs or laptop PCs, and IP television (IPTV) or digital set top box (STB) applications or accessories such as a physical remote control, touchscreen remote control, or universal remote control. Thus, as referred herein, a client device or client, provides an end interface for the end user to directly interact.

The premise gateway 160 is a device that communicates with the client 170 and establishes a connection to the location server 110 via a network 180, which may be a public data network (e.g., Internet) or a private data network (e.g., a private land area network or a private wide area network). Thus, according to various embodiments ofthe present invention, a premise gateway may be implemented in: a standalone routing device such as a wireless Wi-Fi router; a communication modem such as a broadband cable or DSL modem; a dial-up modem; an IPTV, a cable or satellite STB; WiMax modems; wireless mesh network gateway devices; and wireless access point (WAP) devices. The premise gateway 160 is placed in a physical setting, location, or premise 150 to detect the presence of those clients 170 in the location or premise 150, the size of which depends on a coverage of the premise gateway 170.

In one embodiment, a software application or module is provided in the premise gateway 160 to perform a location-update function (LUF) for detecting and communicating the presence status of clients to the location server 110. The LUF application performs a number of pre-conditioning tasks to ready the premise gateway 160 for operation. First, the LUF application is pre-configured with a list of identifications (IDs) of clients 170 that are eligible for presence status detection by the premise gateway 160. For example, the clients 170 may be Wi-Fi capable devices that are eligible for presence status detection via a wireless connection to the premise gateway 160. In this case, the LUF application may be pre-configured with a list of media access control (MAC) addresses of the Wi-Fi clients 170. Thus, when an eligible Wi-Fi client 170 enters the location 150 and establishes a wireless connection with the premise gateway 160, it wirelessly transmits its MAC address to the premise gateway 160. Then, the LUF application of the premise gateway 160 is operable to perform a look-up of the transmitted MAC address in its list to confirm a presence detection and identification of the Wi-Fi client 170 in the location 150. To handle any sudden loss of wireless connectivity between a client 170 and the premise gateway 160, the LUF application further maintains a "keep-alive" timer, which is activated once the client 170 is authenticated by the premise gateway 160 as an eligible client 170. When the aforementioned wireless connection is subsequently disrupted for any reason, the keep-alive timer is started to keep track of the length of time of the disruption. If the disruption time exceeds a predetermined time period, the premise gateway 160 is operable to generate a keep-alive message to the client 170, such as an Internet control message protocol (ICMP) ping or an address resolution protocol (ARP), to determine whether the client 170 is still connected. If the client 170 responds, then the "keep-alive timer" is reset. However, if no response is received from the client 170, such as when the client 170 has left the location 150, the LUF application generates a location update for transmission to the location server 110 to indicate that the client 170 is no longer present at the location 150. In another embodiment, when the wireless communication appears to be disrupted, to minimize the number of keep-alive messages that the LUF application needs to send, the LUF application is operable to monitor the client 170 to detect whether data packets are being received or sent by the client 170. When the LUF application detects such data packets, it automatically resets the keep-alive timer.

In another embodiment, the clients 170 are eligible for presence status detection via a wired connection (e.g., at a docking station or by a cable) to the premise gateway 160. In this case, the LUF application may be configured with a list or table of electronic IDs of the clients 170, such as an electronic individual serial number of each client or a batch serial number of a group or a type of clients that are eligible for presence status detection by the premise gateway 160. Thus, when an eligible client 170 enters the location 150 and is wired connected to the premise gateway 160 to transmit its electronic ID to the premise gateway 160, the LUF application ofthe premise gateway 160 is operable to perform a look-up of the transmitted electronic ID in its ID list to confirm a presence detection and identification of the client 170 in the location 150.

In one embodiment, the LUF application may be pre-coded, by a manufacturer or provider of the premise gateway 160, to include the aforementioned ID list, such as a MAC address list for eligible Wi-Fi clients 170. In another embodiment, the LUF application may further provide a user interface, such as a graphical user interface (GUI) like a web-based interface, for the user to create or amend an existing ID list of eligible clients. In still another embodiment, an initial bonding session is conducted between the premise gateway 160 and those clients 170 that are desired to be serviced by the premise gateway 160 in the location 150, whereby the IDs of such clients 170 are automatically appended to the ID list in the premise gateway 160 by the LUF application. In still another embodiment, the premise gateway 160 is a WAP with multiple access points, one of which is dedicated for presence status detection. Thus, any client that accesses dedicated access point is deemed eligible for presence status detection.

The LUF application is also pre-configured with the address, such as an IP address or a fully qualified domain name (FQDN), of the location server 110 so that it can transmit location update information to the location server 110. The LUF application is further configured with authentication information, such as an authentication code, that allows the location server 110 to authenticate the validity of location updates transmitted from the premise gateway 160.

Process

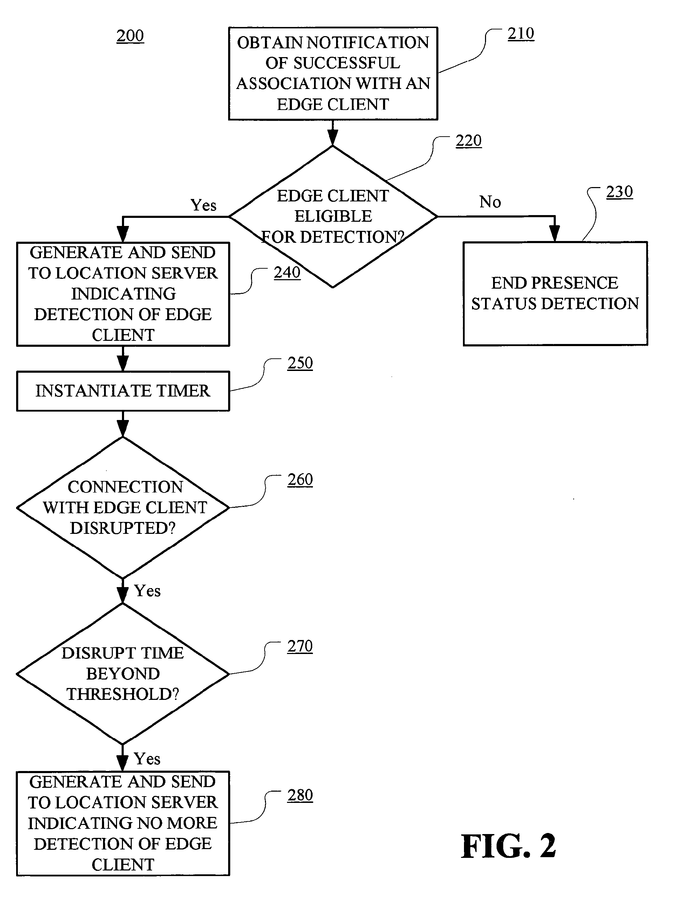

FIG. 2 illustrates a process flow 200 for detecting and communicating the presence status of one or more clients in a desired location or setting so that services or features may be remotely provided to the clients, in accordance with one embodiment of the present invention. For illustrative purposes only and not to be limiting thereof, the process flow 200 is discussed in the context of the system environment illustrated in FIG. 1. The process flow 200 is to be implemented subsequent to the placement of a premise gateway 160 in a desired physical location or setting 150, such as a home, a retail outlet, an office building, etc., for presence detection of clients entering such a location. The premise gateway 160 is connected to a location server 110, either directly or via a network 180 such as the Internet, so that it is able to communicate location updates of clients 170 to the location server 110. Also, the premise gateway 160 includes a LUF application that is pre-configured with an ID list of eligible clients 170 for presence status detection as described earlier.

The process flow 200 is described below with reference to an example to illustrate a possible implementation of the process flow 200 to a practical application. In the example, the clients 170 are Wi-Fi, dual-mode phones capable of using both a VoIP phone service and a cellular phone service for voice communication with other communication devices, and the premise gateway 160 may be one of a wireless Wi-Fi router, a wireless modem (cable, DSL, dial-up, WiMax, etc.) or any other wireless mesh network gateway or WAP device with a LUF application implemented therein. The premise gateway 160 has a range for wireless communication with the clients as indicated by the location 150, which may be a home, a retail outlet, an office building, etc.

At 210, when a dual-mode phone 170 enters the location 150 and manually or automatically completes a successful association (e.g., establishing successful wireless connectivity) with the gateway 160, the LUF application within the premise gateway 160 obtains a notification of the successful association as a state change in the dual-mode phone 170. Thus, the state change in the dual-mode phone 170 is externally detected by the gateway 160. It should be noted that a device state change does not provide information identifying the location of a client such as the dual-mode phone 170.

At 220, once it is notified of the successful association, the LUF application proceeds to authenticate the dual-mode phone 170 by checking the ID of the dual-mode phone 170 against the pre-configured list for a match. In the running example, the MAC address of the dual-mode phone 170, as transmitted for wireless connectivity, is checked against a pre-configured list of MAC addresses of eligible dual-mode phones for presence status detection by the premise gateway 160.

At 230, if there is not a match at 220, the premise gateway 160 ends its querying of the dual-mode phone 170 for presence status detection.

At 240, however, if there is a match at 220, the premise gateway 160 generates and sends to the location server 110 (e.g., via the Internet 180) a first location update message (LUM) indicating that the particular dual-phone 170 is detected and present at the location 150.

At 250, the LUF application also activates a keep-alive timer as described earlier. It should be understood that the LUF application also may activate the keep-alive timer prior to or concurrent with generating the LUM at 240.

At 260, once the keep-alive timer is activated, the LUF application continues to monitor the wireless connection between the premise gateway 160 and the dual-mode phone 160 to determine whether there is a disruption of such a connection.

At 270, if there is a disruption in the wireless connection, the LUF application starts the keep-alive timer and monitors the disruption to determine whether such disruption time extends beyond a predetermined time threshold.

At 280, if the disruption time extends beyond the predetermined time threshold, the dual-mode phone 170 is deemed to have completely disassociated from the premise gateway 160, and therefore another state change in the dual-mode phone 170. The LUF application then generates and sends to the location server 110 (e.g., via the Internet 180) a second location update message (LUM) indicating that the particular dual-mode phone 170 is no longer detected and present at the location 150.

As described earlier, the location server 110 manages the presence status of an dual-phone 170. It receives presence status information of the client 170 from the premise gateway 160 or directly from the client 170. It is responsible for determining the connectivity path to the dual-phone 170, especially when multiple concurrent paths are available. In the running example, the dual-phone 170 has two connectivity paths: a VoIP/Wi-Fi path and the cellular path. Thus, the location server 110 receives the first LUM from the premise gateway 160, which may include location status information of the VoIP/Wi-Fi path for the dual-phone 170, such as the available bandwidth or strength of the Wi-Fi connection between the dual-phone 170 and the premise gateway 160 and the available bandwidth or strength of the IP connection of the premise gateway 160 to the network 180 and the feature server 120 that hosts the establishment of a VoIP session with the dual-phone 170. For example, the feature server 120 may be a SIP proxy server typical in an SIP architecture for VoIP. The location server 110 is operable to receive at least a portion of the location status information of the VoIP/Wi-Fi path from the feature server 120 as well. The location server 110 also receives location status information of the cellular path for the dual-phone 170 from either the dual-phone 170, the feature server 130, or both. In the running example, the feature server 130 hosts the establishment of a cellular (e.g., GSM, TDMA, CDMA) session with the dual-phone 170. The location status information includes, for example, the wireless signal strength of the dual-phone 170 for cellular communication.

The location server 110 may apply an algorithm to determine the optimal communication path for the dual-phone 170 and communicate the selected path to the corresponding feature server 120 or 130. For example, if the selected path is VoIP, the location server 110 communicates such a selection to the feature server 120 that handles VoIP sessions. Then, all incoming to and outgoing calls from the dual-phone 170 are automatically handled by the VoIP phone service. If the selected path is cellular, the location server 110 communicates such a selection to the feature server 130 that handles cellular sessions. Then, all incoming to and outgoing calls from the dual-phone 170 are automatically handled by the cellular phone service. In an alternative embodiment, all incoming calls are handled by the cellular phone service and all outgoing calls are handled by the VoIP phone service (for example, when the cellular phone service provides free incoming calls), or vice versa, without the need for the location server 110 to determine the optimal communication path. In another alternative embodiment, an incoming call to the dual-mode phone 170 is received through the cellular phone service (or VoIP phone service), as facilitated by the feature server 130 (or the feature server 120). If the call is not answered, it is then routed through the VoIP phone service (or cellular phone service), as facilitated by the feature server 120 (or the feature server 130). In the above embodiments, prior arrangements may be made between the feature servers 120 and 130 to facilitate the call routings as desired or requested by the users.

Additional Implementation Examples

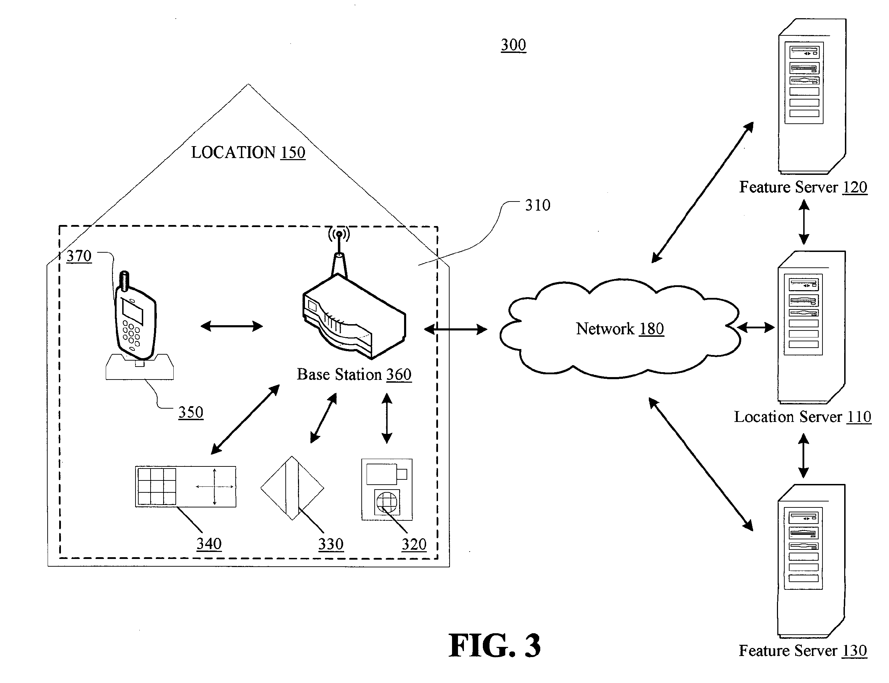

The process flow 200 is also applicable to another fixed mobile convergence implementation example wherein the client is a Wi-Fi, dual-mode phone also capable of using both VoIP and cellular phone services for voice communication. FIG. 3 illustrates an implementation example, wherein there is a system environment 300 in which one or more edgeways are deployed to detect and provide location updates of one or more clients 370, which are Wi-Fi, dual-mode phones capable of using both the VoIP and cellular phone services. As with the system environment 100 described above, the system environment 300 also includes one or more location servers (110) and one or more feature servers (120, 130) that are accessible via the network 180. In this example, the dual-mode phone 370, the base station 360, and a docking station 350 are components of a cordless phone system 310, which includes additional components, such as an audio and/or video monitor 320, a motion sensor 330, an audio sensor 340, or any other component.

The docking station 350 serves as a holder and, optionally, a charging station for the dual-phone 370. It also functions as a premise gateway (with a LUF application therein). Thus, it is operable to establish a connection or link to the location server 110 through the network 180, or through both the base station 360 and the network 180. The base station 360 is operable to facilitate communication between the various components in the cordless phone system 310. In one embodiment, the base station 360 may provide a wired or wireless connection to the docking station 350. Thus, the base station 360 is also operable to facilitate communication between the docking station 350 and the network 180, as noted above. In one embodiment, because of the available connection between the docking station 350 and the base station 360, these two components may together function as a premise gateway, with a LUF application residing in either the docking station 350 or the base station 360. In a further embodiment, also because of the available connection between the docking station 350 and the base station 360, the base station 360 is operable to make various other components in the cordless phone system 310 available for communication with the dual-mode phone 370. For example, as facilitated by the base station 360, the dual-mode phone 370 may be used to monitor each of other components in the cordless phone system 310 for audio and/or video or may be alerted by each such component of an audio or motion detection. Thus, the base station 360 also may function as both a location server and a feature server to provide the aforementioned monitoring features, in addition to being a premise gateway.

The dual-mode phone 370 is operable to normally use the cellular phone service for communication. However, when the dual-mode phone 370 is connected or docked at the docking station 350, which functions as the premise gateway by itself or in combination with the base station 360, the docking station 350 operates to send a LUM to the location server 110 to notify of the presence of the dual-mode phone 370, as described earlier with reference to 240 in FIG. 2. As noted above, the LUM may be sent from the docking station 350 through the network 180, directly or via the base station 360, and onwards to the location server the 110. In turn, the location server 110 manages the presence status of the dual-mode phone 370 as described earlier. In the case where docking station 350 and the base station 360 together function as a premise gateway with the LUF application residing in the base station 360, then the base station 360 operates to send out the LUM to the location server 110. In the case where the base station 360 also functions as both a location server and a feature server, the LUM as received from the docking station 350 or internally generated in the base station 360 enables the base station 360 to provide the aforementioned features to the dual-phone 370 (e.g., enabling the phone to communicate with other components in the cordless base station 310).

In the system environment 300, the docking of the dual-mode phone 370 to the docking station 350 also serves as notification of a successful association between the two, as described earlier with reference to 210 in FIG. 2. Thus, the removal of the dual-mode phone 370 from the docking station 350 serves to disassociate the dual-mode phone 370 and disrupt its connection to the docking station 350 as described earlier with reference to 260-280 in FIG. 2. Furthermore, the determination of whether the dual-mode phone 370 is eligible for present status detection by the docking station 350 includes the docking station 350 determining whether the dual-mode phone 370 is a component of the phone system 310, and this determination is as described earlier with reference to 220 in FIG. 2.

In an alternative implementation example to the one illustrated in FIG. 3, the phone system 310 does not include the docking station 350. Instead, the dual-phone 370 may be wired or wirelessly connected to the base station 360, which now serves as the docking station for holding and/or charging the dual-phone 370 and as a premise gateway as well. In the case where the dual-phone 370 is operable to be docked at the base station 360 with a wired connection, the aforementioned discussion with reference to FIG. 3 also applies to the FMC operations in this example, with the base station 360 additionally functions as a premise gateway. In the case where the dual-mode phone 370 is operable to be wirelessly connected to the base station 360 through a wireless communication protocol (e.g., Wi-Fi), the aforementioned discussion with reference to FIGs. 1-2 also applies to the FMC operations in this example.

Although some of the above implementation examples are described with reference to a Wi-Fi wireless connection between a client and a premise gateway, it should be understood that such a description is also applicable for any other type of past, present, or future wireless connection. For example, the wireless connection is Bluetooth, whereby the ID of each client may be a Bluetooth address and personal identification number (PIN), instead of a MAC address for Wi-Fi.

Accordingly, in contrast to a prior art dual-mode phone that would have required added applications therein to directly announce its location in order to establish VoIP sessions with the feature server 120, the dual-mode phone for use with various embodiments of the present invention is simpler in design because it does not require the added applications for making its location known and for establishing VoIP sessions with the feature server 120. Instead, the dual-phone may rely on a premise gateway to perform such gateway functionalities on its behalf. Furthermore, the premise gateway is operable to provide the same gateway functionalities to other dual-mode phones; whereas, the gateway functionalities of each prior art dual-mode phone are not available to other dual-mode phones.

Another benefit of using a separate premise gateway to detect and communicate a presence-status of a client, such as a mobile phone, is the ability of the premise gateway to provide an accurate location of the mobile phone for emergency 911 services. In a traditional phone service, such as the plain old telephone service (POTS), a particular phone number generally is associated with a fixed address. Thus, when a user makes an emergency 911 call from a POTS phone, the call in most cases is sent to a public safety answering point (PSAP) that is responsible for helping people in the particular geographic area or community that includes the fixed address associated with the POTS phone. PSAP personnel is then able to automatically identify the location of the distressed call and direct the closest emergency personnel to such a location. However, as noted earlier, Internet or VoIP phone services enable users to take their phone service anywhere there is an Internet (or some other network) connection. Thus, it may not be possible to automatically determine the location of the callers, including emergency 911 callers.

Accordingly, in one embodiment of the present invention, the premise gateway, such as the premise gateway 160 is operable to not only communicate a presence status of a particular client 170, but to also communicate its own physical location, such as its physical address (or more detailed location information, such as a particular sub-location, e.g., a room, a cubicle, a quadrant, in a location). Because the client 170 is in the vicinity or premise covered by the premise gateway 160, providing the location of the premise gateway 160 also provides the relative location of the client 170. Consequently, when a 911 call is made from the client 170, its detection by the premise gateway 160 may be communicated along with the location or presence status of the premise gateway to the location server 110. In turn, the location server 110 provides such location information to a feature server 120, 130, or another feature server dedicated to handling 911 calls, so that the location information may be sent to the appropriate PSAP for an emergency response.

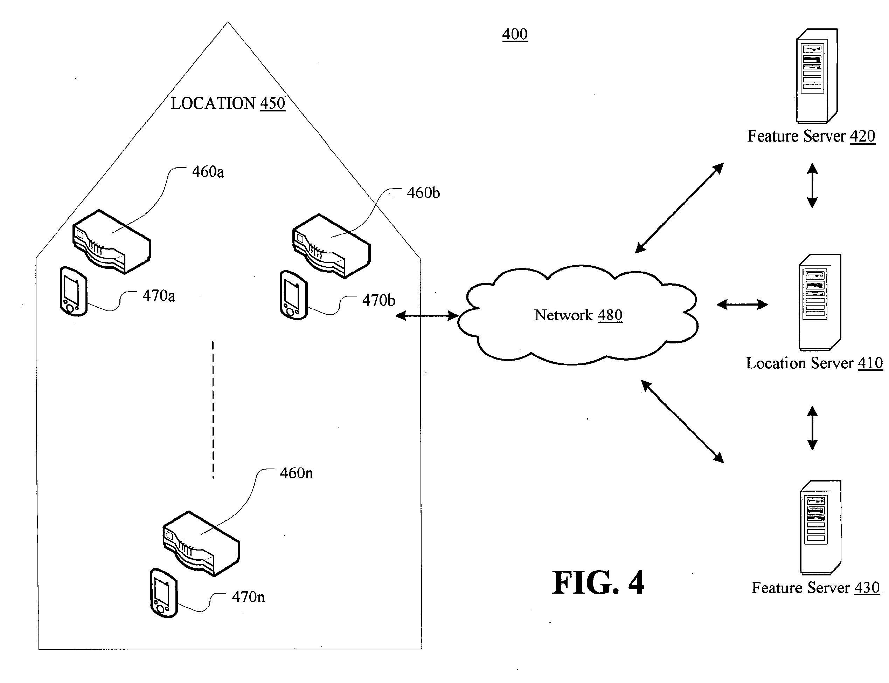

FIG. 4 illustrates an implementation example in a system environment 400, wherein there is one or more video set top boxes (STBs) 460a-n, such as cable, satellite, or IP STBs, situated throughout a location 450, such as a home for providing different video services to different locations. There is also one or more remote controls 470a-n for accessing and controlling the STBs 460a-n. In this implementation example, each remote control 470 is a client, each STB 460a-n also serves as a premise gateway with a LUF application therein for covering a different area ofthe location 450 to automatically detect a presence status of any one of the remote controls 470a-n based on a state change in such a remote control. Examples of a state change in a remote control include but are not limited to a powering on/off of the remote control, a transmission of any user-selected signal from the remote control (e.g., changing channels, changing volume, bringing up a program guide, ordering a video on demand, selecting a particular video service). The system environment 400 also includes a location server 410 and two feature servers 420 and 430. The location server 410 is operationally similar to the location server 110 described earlier. The two feature servers 420 and 430 may provide different video services, such as for satellite television (SATV) service and one cable television (CATV) service, respectively. The feature servers 420 and 430 are operationally similar to the feature servers 120 and 130 described earlier, respectively.

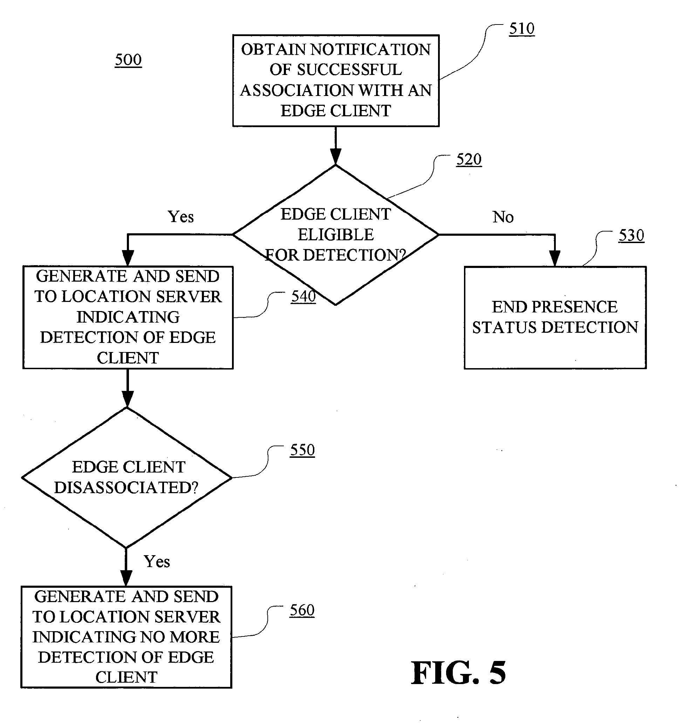

FIG. 5 illustrates a process flow 500 for detecting and communicating the presence of one or more remote controls at a location or setting so that services or features may be remotely provided to the remote controls. For illustrative purposes only and not to be limiting thereof, the process flow 500 is discussed in the context of the system environment illustrated in FIG. 4.

At 510, when a user with, for example, a remote control 470a enters an area covered by, for example, an STB 460a, and changes the state of the remote control 470a (e.g., power on the STB 460a), a successful association of the remote control 470a to the STB 460a is made, and the LUF application within the premise gateway 460a obtains a notification of the successful association and the state change in the dual-mode phone 170.

At 520, once it is notified of the successful association, the LUF application in the STB 460a proceeds to authenticate the remote control 470a by checking the ID of the remote control 470a (which may have been transmitted along with the state change) against a pre-configured ID list for a match.

At 530, if there is not a match at 220, the STB 460a ends its querying of the remote control 470a for presence status detection.

At 540, however, if there is a match at 220, the STB 460a generates and sends to the location server 410 (e.g., via a network 480 such as any known video network) a first location update message (LUM) indicating that the particular remote control 470a is detected and present at a particular area within the location 450.

At 550, the LUF application in the STB 460a continuously monitors for a predetermined state change (e.g., a powering off of the STB 460a) from the remote control 470a to indicate that it has disassociated itself from the STB 460a. It should be noted that the LUF application may start the continuous monitoring prior to or concurrent with the generating the LUM at 540 above.

At 560, if the predetermined state change is detected, the remote control 470a is deemed to have completely disassociated from the STB 460a, the LUF application then generates and sends to the location server 410 a second LUM indicating that the remote control 470a is no longer detected at the area covered by the STB 460a.

In this implementation example, the location server 410 manages the presence status of each remote control 470a-n. It receives presence status information of the remote controls 470a-n from each STB 460a-n. It is responsible for determining the connectivity path to each remote control 470a-n and thus the associated service to provide, especially when multiple concurrent paths (or associated services) are available. In this implementation example, the available services are SATV and CATV services. Thus, the location server 410 receives the first LUM from a remote control 470a, which may include location status information for the remote control 470a to indicate the video service selected by the user of the remote control 470a. The location server 410 then communicates such a selection to the feature server 420 or 430 that handles the selected video service. For example, if the selected video service is SATV service, then the location server 410 communicates such a selection to the feature server 420, which then provides the user with programming from the SATV service through the STB 460a. Should the user subsequently select another video service, such as CATV service, with the remote control 470a, that constitutes an state change, and the process flow 500 is repeated again to provide CATV service to the user through the STB 460a. The process flow 500 applies to other STBs 460b-n and other remote controls 470b-n as well.

In another implementation example, referring back to FIG. 4, each STB 460an functions not only as a premise gateway but also as a location server and a feature server. Thus, each STB 460a-n may be used for a different video service. For example, the STBs 460a-d are used for the SATV service, and the STBs 460f-n are used for CATV service. The process flow 600 also applies to this implementation example, except that the particular video service provided to each particular remote control 470 depends on which STB 460 that detects a presence status of such a remote control. Thus, in this implementation example, there is no need for the user to select a particular video service with a remote control 470 to effect a state change for a change of video service.

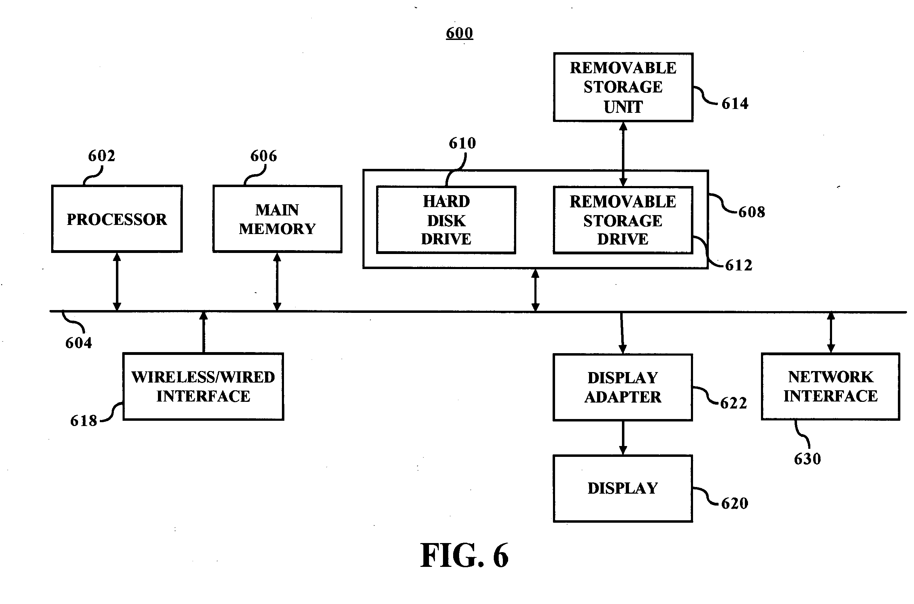

FIG. 6 illustrates an exemplary block diagram of a computerized module 600 that is operable to be used to implement one or more of the aforementioned premise gateway functionalities in any device to be used as a premise gateway device in accordance with one of the various embodiments of the present invention. It should be understood that a more sophisticated computerized module is operable to be used. Furthermore, components may be added or removed from the computerized module 600 to provide the desired functionality.

The computerized module 600 includes one or more processors, such as processor 602, providing an execution platform for executing software. Thus, the computerized module 600 includes one or more single-core or multi-core processors of any of a number of computer processors, such as processors from Intel and AMD. As referred herein, a computer processor may be a general-purpose processor, such as a central processing unit (CPU) or any other multi-purpose processor or microprocessor. A computer processor also may be a special-purpose processor, such as a graphics processing unit (GPU), an audio processor, a digital signal processor, or another processor dedicated for one or more processing purposes. Commands and data from the processor 602 are communicated over a communication bus 604. The computerized module 600 also includes a main memory 606 where software is resident during runtime, and a secondary memory 608. The secondary memory 608 may also be a CRM that may be used to store the software programs, applications, or modules that implement the LUF application in a premise gateway device. The main memory 606 and secondary memory 608 (and an optional removable storage unit 614) each includes, for example, a hard disk drive and/or a removable storage drive 612 representing a floppy diskette drive, a magnetic tape drive, a compact disk drive, etc., or a nonvolatile memory where a copy of the software may be stored. In one example, the secondary memory 608 also includes ROM (read only memory), EPROM (erasable, programmable ROM), EEPROM (electrically erasable, programmable ROM), or any other electronic, optical, magnetic, or other storage or transmission device capable of providing a processor or processing unit with computer-readable instructions. The computerized module 600 may include a display 620 connected via a display adapter 622, user interfaces comprising a wireless interface for establishing wire connectivity with clients. A network interface 630 is provided for communicating with networks such as a PSTN network, a CATV or SATV network, the Internet or any other IP-based network.

What has been described and illustrated herein are various embodiments along with some of their variations. The terms, descriptions and figures used herein are set forth by way of illustration only and are not meant as limitations. Those skilled in the art will recognize that many variations are possible within the spirit and scope of the subject matter, which is intended to be defined by the following claims - and their equivalents - in which all terms are meant in their broadest reasonable sense unless otherwise indicated.

## Claims

1. A method for detecting and communicating a presence status of a device to provide multiple services to the device, comprising:
detecting a first state change of the device at a location, the detecting is external to the device;
determining a first presence status of the device at the location based on the detected first state change; and
communicating the detected first presence status of the device to provide the device with first one of the multiple services that is associated with the detected first presence status at the location.

2. The method of claim 1, further comprising:
monitoring the device for a second state change of the device at the location;
upon detecting the second state change of the device, detecting a second presence status of the device at the location based on the detected second state change; and
communicating the detected second presence status of the device to provide the device with a second one of the multiple services that is associated with the detected second presence status of the device.

3. The method of claim 2, wherein communicating the detected first presence status of the device comprises:
a gateway communicating the detected first presence status of the device and a physical location of the gateway, the gateway is external and separate from the device.

4. The method of claim 2, wherein one of the first and second services is a voice over Internet protocol (VoIP) service, and the other one of the first and second services is a cellular phone service.

5. The method of claim 1, wherein the device is remote control for controlling a video set top box (STB), and detecting the first state change of the device at the location comprises:
the video STB detecting the first state change of the remote control at the location.

6. The method of claim 1, further comprising:
determining whether the device is eligible for a presence status detection; and
wherein detecting the first presence status of the device at the location comprises detecting the first presence status of the device at the location upon the determining that the device is eligible for the presence status detection.

7. The method of claim 1, wherein detecting the first state change of the device at the location comprises:
wirelessly detecting the first state change of the device at the location.

8. The method of claim 1, further comprising:
establishing a connection with the device; and
instantiating a timer upon a detection of the first presence status of the device.

9. The method of claim 8, further comprising:
determining whether the established connection is disrupted;
upon a determination that the established connection is disrupted, activate the timer to determine whether a time in which the established connection is disrupted exceeds a predetermined time period; and
upon a determination that the disruption time of the established connection exceeds the predetermined time period, communicating a second presence status of the device to provide the device with a second one of the multiple services that is associated with the second presence status of the device.

10. The method of claim 1, wherein determining whether the device is eligible for the presence status detection comprises:
determining whether the first state change of the device is detected at a predetermined access point.

11. A system for detecting and communicating a presence status of a client device to provide multiple services to the client device, comprising:
a location server operable to manage a presence status of the client device;
a first gateway device located at a first location and operable to detect a presence status of the device at the first location and to communicate the presence status of the client device at the first location to the location server, the first gateway device is different from the client device;
a first feature server operable to provide the client device with a first one of the multiple services based on the communicated presence status received at the location server is of a first status; and
a second feature server operable to provide the client device with a second one of the multiple services based on the communicated presence status received at the location server is of a second status.

12. The system of claim 11, wherein the first gateway device further communicates its physical location to the location server.

13. The system of claim 11, wherein the client device is a dual-mode phone capable of voice communication via a voice-over-Internet-protocol (VoIP) phone service in a first mode and via a cellular phone service in a second mode.

14. The system of claim 12, wherein the first service provided by the first feature server is an emergency 911 service, and the second service provided by the second feature server is the cellular phone service.

15. The system of claim 12, wherein the first gateway device is operable to wirelessly detect the presence status of the client device.

16. The system of claim 11, wherein the first gateway device is a video set top box (STB), and client device is a remote control capable of controlling the video STB to provide the multiple video services via the video STB.

17. The system of claim 11, further comprising:
a second gateway device located at a second location and operable to detect a presence status of the device at the second location and to communicate the presence status of the client device at the second location to the location server, the second gateway device is different from the first gateway device and the client device.

18. The system of claim 17, wherein the first gateway device is operable to provide the client device with the first service from the first feature server, and the second gateway device is operable to provide the client device with the second service from the second feature server.

19. A computer readable medium on which is encoded program code for detecting and communicating a presence status of a device to provide multiple services to the at least one device, the program code comprising:
program code for detecting a first state change of the device at a location;
program code for detecting a first presence status of the device at the location based on the detected first state change; and
program code for communicating the detected first presence status of the device to provide the device with first one of the multiple services that is associated with the detected first presence status at the location.

20. The computer readable medium of claim 19, further comprising:
program code for monitoring the device for a second state change of the device at the location;
program code for detecting a second presence status of the device at the location based on the detected second state change upon detecting the second state change of the device; and
program code for communicating the detected second presence status of the device to provide the device with a second one of the multiple services that is associated with the detected second presence status of the device.
